# EUROPEAN PATENT APPLICATION

(11) **EP 4 398 439 A1**
(43) Date of publication of application: **10.07.2024**
(21) Application number: 22862748.5
(22) Date of filing: 25.05.2022
(51) Int. Cl.: H02J 7/00

(54) **BATTERY MODULE, AND ENERGY STORAGE SYSTEM AND CONTROL METHOD THEREFOR**

(30) Priority: 02.09.2021 CN 202111026273
(71) Applicant: Sungrow Power Supply Co., Ltd., Hefei, Anhui 230088 (CN)
(72) Inventor: SUN, Wei, Hefei, Anhui 230088 (CN); LI, Pengju, Hefei, Anhui 230088 (CN); CHEN, Fei, Hefei, Anhui 230088 (CN); CHEN, Xiaoguang, Hefei, Anhui 230088 (CN)
(74) Representative: Rooney, John-Paul
(86) International application number: PCT/CN2022/094854
(87) International publication number: WO 2023/029606

(57) **Abstract**

The present application provides a battery module, and an energy storage system and a control method therefor. When a corresponding preset condition is satisfied, battery modules can be switched in or out of a system by means of the on-off of a main loop on-off control circuit and a bypass on-off control circuit, so that the battery modules currently connected into the system can be adjusted in real time, and thus the battery modules in the system can satisfy the corresponding preset condition one by one, namely achieving the same state (for example, achieving SOC equalization), without causing energy waste. Moreover, a main loop buffer circuit or a bypass buffer circuit is provided in the battery module, so that energy impact generated when the battery module is switched in or cut out of the system can be absorbed, and thus a corresponding device is prevented from bearing large voltage/current stress.

## Description

This application claims the priority to Chinese Patent Application No. 202111026273.X, titled "BATTERY MODULE, POWER STORAGE SYSTEM, AND METHOD FOR CONTROLLING THE SAME", filed on September 02, 2021 with the China National Intellectual Property Administration, which is incorporated herein by reference in its entirety.

### FIELD

The present disclosure relates to the technical field of power electronics, in particular to a battery module, a power storage system, and a control method for controlling the power storage system.

### BACKGROUND

Generally, a battery cluster in a power storage system constitutes multiple battery modules connected in series. An issue of imbalanced state of charge (SOC) is nearly inevitable when using the battery modules in the same battery cluster.

A conventional solution for addressing the issue of imbalanced SOC among the battery modules is as follows. The battery module having a higher SOC is passively discharged via a resistor, where excessive power dissipates as heat, so that its SOC is consistent with a lower SOC of other battery modules.

In such solution, the dissipating power results in a waste of energy.

### SUMMARY

A battery module, a power storage system, and a method for controlling the power storage system are provided according to embodiments of the present disclosure. Balanced SOC among battery modules can be achieved while avoiding a waste of energy.

Following technical solutions are provided herein in order to achieve at least the foregoing objective.

In a first aspect, a battery module is provided according to an embodiment of the present disclosure. The battery module comprises: a battery body, a main-path connection controlling circuit, a bypass connection controlling circuit, and at least one buffer circuit, where: the battery body is connected to a positive terminal or a negative terminal of the battery module via the main-path connection controlling circuit, and the bypass connection controlling circuit is connected between the positive terminal and the negative terminal of the battery module; the battery module is configured to be connected into or disconnected from a system through an closed-or-open state of the main-path connection controlling circuit and an closed-or-open state of the bypass connection controlling circuit, in response to the battery module meeting a predetermined condition; and the at least one buffer circuit each is connected in parallel with the main-path connection controlling circuit or the bypass connection controlling circuit, and is configured to buffer an abrupt power change generated when the battery module is connected into or disconnected from the system.

In an embodiment, a quantity of the at least one the buffer circuits is 2, and the at least one the buffer circuits comprises a main-path buffer circuit or a bypass buffer circuit; or a quantity of the at least one the buffer circuits is 2, and the at least one the buffer circuits comprises a main-path buffer circuit and a bypass buffer circuit respectively; where: the main-path buffer circuit is connected in parallel with the main-path connection controlling circuit, and is configured to buffer the abrupt power change when the battery module is connected into the system; and the bypass buffer circuit is connected in parallel with the bypass connection controlling circuit, and is configured to buffer the abrupt power change when the battery module is disconnected from the system.

In an embodiment, the main-path buffer circuit and the bypass buffer circuit each comprises: a buffer apparatus and a controllable switch, which are connected in series; where the controllable switch is closed in response to the battery module is connected into or disconnected from the system, and is open in response to the abrupt power change being over.

In an embodiment, the buffer apparatus comprises a resistor.

In an embodiment, the main-path connection controlling circuit and the bypass connection controlling circuit each comprises a double-pole switch with a single path, where: the double-pole switch of the main-path connection controlling circuit is configured to charge or discharge of the battery body when being closed under control, and the double-pole switch of the bypass connection controlling circuit is configured to implement a charging bypass or a discharging bypass for the battery body when being closed under control.

In an embodiment, the battery module further comprises: a battery management unit (BMU), configured to: monitor a parameter of the battery body; control the closed-or-open state of the main-path connection controlling circuit, the closed-or-open state of the bypass connection controlling circuit, an closed-or-open state of the main-path buffer circuit, and an closed-or-open state of the bypass buffer circuit; and connect an external device in communication.

In a second aspect, a power storage system is provided according to an embodiment of the present disclosure. The power storage system comprises: a control unit, at least one battery cluster, and at least one power converter, where for each of the at least one battery cluster: said battery cluster comprises multiple battery modules, each of which is any foregoing battery module in the first aspect and which are connected in series to form a serial connection, and two terminals of the serial connection are connected to a direct current (DC) bus of a corresponding power converter of the at least one power converter; and the control unit is configured to control each of the multiple battery modules to be connected into or disconnected from a power path of said battery cluster in response to said battery module meeting a predetermined corresponding condition.

In an embodiment, each of the battery modules comprises two buffer circuits, which are the main-path buffer circuit and the bypass buffer circuit; or each of the battery modules comprises a buffer circuit, which is the main-path buffer circuit or the bypass buffer circuit, at least one bus buffer circuit is connected between said battery cluster and the corresponding power converter, and each of the at least one bus buffer circuit is connected on the direct current bus or is connected in series with a bus capacitor between a positive line and a negative line of the direct current bus.

In one embodiment, each of the at least one bus buffer circuit comprises: a bus controllable switch and a bus buffer apparatus, which are connected in parallel, where: the bus controllable switch is configured to be open in response to any of the multiple battery modules being connected into the power path and each of the multiple battery modules not comprising the main-path buffer circuit, or in response to any of the multiple battery modules being disconnected from the power path of and each of the multiple battery modules not comprising the bypass buffer circuit; and the bus controllable switch is configured to be closed in response to a difference between a voltage across said battery cluster and a voltage across the bus capacitor is less than a predetermined difference.

In an embodiment, the bus buffer apparatus comprises: a resistor, an inductor, or a resistor and an inductor that are connected in parallel.

In an embodiment, a switch box is connected between each of the at least one battery cluster and the corresponding power converter, and the switch box comprises a main-path switch, where the power storage system comprises a bus buffer circuit, and the bus buffer circuit comprises a bus controllable switch and a bus buffer apparatus connected in parallel, and the bus controllable switch is identical to or different from the main-path switch connected on a corresponding line in the switch box.

In an embodiment, the control unit is a battery management system (BMS), and the BMS comprises a system battery management unit (SMU), a cluster management unit (CMU) of each of the at least one battery cluster, and the BMU in each of the multiple battery modules, where the SMU, the CMU, and the BMU are connected in hierarchical communication, and the CMU is connected to the power converter in communication.

In an embodiment, each of the at least one power converter is a direct-current-to-alternate-current (DCAC) converter, or a direct-current-to-direct-current (DCDC) converter, where the DCDC converter is connected to one or both of a power grid and a load via a corresponding DCAC converter.

In a third aspect, a method for controlling a power storage system is provided according to an embodiment of the present disclosure. The method is applicable to the control unit of any foregoing power storage system in the second aspect, and comprises: step S101, determining whether each of the multiple battery modules in a battery cluster of the at least one battery cluster of the power storage system meets the predetermined condition; and step S102, controlling a battery module of the multiple battery modules to be connected into or discontented from the power path of the battery cluster, and controlling the at least one buffer circuit in the battery module to buffer the abrupt power change generated when the battery module is connected into or discontented from the power path of the battery cluster, in response to the battery module meeting the predetermined condition.

In an embodiment, the predetermined condition is a predetermined condition for connection or a predetermined condition for disconnection, where the predetermined condition for disconnection is one of: a first condition, indicating that an operating parameter of the battery module reaches a predetermined upper limit when the battery cluster is being charged, where the operating parameter comprises a voltage, state of charge (SOC), state of health (SOH), or average temperature; a second condition, indicating that the operating parameter of the battery module reaches a predetermined lower limit when the battery cluster is being discharged; and a third condition, indicating that the battery module is abnormal or faulty.

In an embodiment, the battery module comprises the main-path connection controlling circuit, the bypass connection controlling circuit, the main-path buffer circuit, and the bypass buffer circuit, where: when the predetermined condition is the predetermined condition for disconnection, the step S102 comprises: switching the main-path connection controlling circuit to be open, and switching the corresponding bypass buffer circuit to be closed; and when the predetermined condition is any one of the predetermined condition for connection, the step S102 comprises: switching the bypass connection controlling circuit to be open, and switching the main-path buffer circuit to be closed.

In an embodiment, the battery module comprises the main-path connection controlling circuit, the bypass connection controlling circuit, and the main-path buffer circuit, and the bus buffer circuit is connected between the battery cluster and the corresponding power converter, where: when the predetermined condition is the predetermined condition for disconnection, the step S102 comprises: switching the main-path connection controlling circuit to be open and controlling the bus controllable switch in the bus buffer circuit to be off, and then switching the bypass connection controlling circuit to be closed; and when the predetermined condition is he predetermined condition for connection, the step S102 comprises: switching the bypass connection controlling circuit to be open, and switching the main-path buffer circuit to be closed.

Alternatively, the battery module comprises the main-path connection controlling circuit, the bypass connection controlling circuit, and the bypass buffer circuit, and the bus buffer circuit is connected between the battery cluster and the corresponding power converter, where: when the predetermined condition is the predetermined condition for disconnection, the step S102 comprises: switching the main-path connection controlling circuit to be open, and switching the bypass buffer circuit to be closed; and when the predetermined condition is the predetermined condition for connection, the step S102 comprises: switching the bypass connection controlling circuit to be open and controlling the bus controllable switch in the bus buffer circuit to be off, and then switching the main-path connection controlling circuit to be closed.

In an embodiment, after the step S102, the method further comprises: step S103, determining whether the difference between the voltage across the battery cluster and the voltage across the bus capacitor is within a predetermined range; and step S104, stopping buffering the abrupt power change to complete a process of connecting the battery module to the power path or disconnecting the battery module from the power path, in response to the difference being within the predetermined range.

In an embodiment, the battery module comprises the main-path connection controlling circuit, the bypass connection controlling circuit, the main-path buffer circuit, and the bypass buffer circuit, where: when the predetermined condition is the predetermined condition for disconnection, the step S104 comprises switching the bypass connection controlling circuit to be closed; and when the predetermined condition is the predetermined condition for connection, the step S104 comprises switching the main-path connection controlling circuit to be closed.

Alternatively, the battery module comprises the main-path connection controlling circuit, the bypass connection controlling circuit, and the main-path buffer circuit, and the bus buffer circuit is connected between the battery cluster and the corresponding power converter, where: when the predetermined condition is the predetermined condition for disconnection, the step S104 comprises switching the bus controllable switch to be on; and when the predetermined condition is the predetermined condition for connection, the step S104 comprises switching the main-path connection controlling circuit to be switched to be closed.

Alternatively, the battery module comprises the main-path connection controlling circuit, the bypass connection controlling circuit, and the bypass buffer circuit, and the bus buffer circuit is connected between the battery cluster and the corresponding power converter, where: when the predetermined condition is the predetermined condition for disconnection, the step S104 comprises switching the bypass connection controlling circuit to be closed; and when the predetermined condition is the predetermined condition for connection, the step S104 comprises switching the bus controllable switch to be on.

In an embodiment, after switching the bypass connection controlling circuit to be closed, the method further comprises switching the bypass buffer circuit to be open; and after switching the main-path connection controlling circuit to be closed, the method further comprises switching the main-path buffer circuit to be open.

In an embodiment, in response to the battery module meeting the predetermined conditions, before the step S102, the method comprises: step S111, limiting a current on a direct current (DC) bus of the corresponding power converter within a predetermined current range.

In an embodiment, the step S111 comprises: controlling the current on the DC bus to be lowered into the predetermined current range; and controlling the corresponding power converter to lock transistors in the corresponding power converter, or switching off the main-path switch in the switch box between the battery cluster and the corresponding power converter when there is the switch box.

In an embodiment, after the step S104, the method further comprises: step S105, updating a parameter of the battery cluster, and controlling the corresponding power converter to operate normally, where the steps S101 to S105 are repeated until each of the multiple battery modules in each of the at least one battery cluster meets the predetermined condition.

In an embodiment, before the step S101, the method further comprises: step S201, performing self-inspection at start-up, and controlling a power path between the battery cluster and the corresponding power converter to be closed in response to a result of the self-inspection being normal; step S202, detecting a parameter of the battery cluster, setting a reference range of the parameter, and switching off all switches in each of the multiple battery modules; and step S203, controlling the main-path connection controlling circuit in each of the multiple battery modules to be closed, and controlling the corresponding power converter to operate normally.

According to embodiments of the present disclosure, the battery module can be connected into or disconnected from the system based on the open/closed state of the main-path control circuit and the open/closed state of the bypass connection controlling circuit, when it meets the corresponding predetermined condition. Thereby, battery modules which are current connected to the system can be adjusted in real time, and all battery modules in the system can meet the corresponding predetermined condition gradually. That is, all battery modules can reach the same status, e.g., achieving balanced SOC. There would be few waste of energy during such process. Moreover, the battery module comprises the main-path buffer circuit or the bypass buffer circuit, which can buffer the abrupt power change when the battery module is connected into or disconnected from the system. Hence, devices are protected from large voltage/current stress.

### BRIEF DESCRIPTION OF THE DRAWINGS

Hereinafter drawings to be applied in embodiments of the present disclosure or in conventional technology are briefly described, in order to clarify illustration of technical solutions according to embodiments of the present disclosure or in conventional technology. Apparently, the drawings in the following descriptions are only some embodiments of the present disclosure, and other drawings may be obtained by those skilled in the art based on the provided drawings without exerting creative efforts.
Figure 1a, Figure 1b, Figure 1c, and Figure 2 show schematic structural diagrams of four power storage systems, respectively, according to embodiments of the present disclosure.
Figure 3 to Figure 6 shown flowcharts of four methods, respectively, for controlling a power storage system according to embodiments of the present disclosure.

### DETAILED DESCRIPTION

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Herein the terms such as "include", "comprise" or any other variants thereof means to be non-exclusive. Therefore, a process, a method, an article or a device including a series of elements include not only the disclosed elements but also other elements that are not clearly enumerated, or further include inherent elements of the process, the method, the article or the device. Unless expressively limited, the statement "including a... " does not exclude the case that other similar elements may exist in the process, the method, the article or the device other than enumerated elements.

A battery module is provided according to embodiments of the present disclosure, and is capable to achieve balanced SOC among battery modules while avoiding a waste of power.

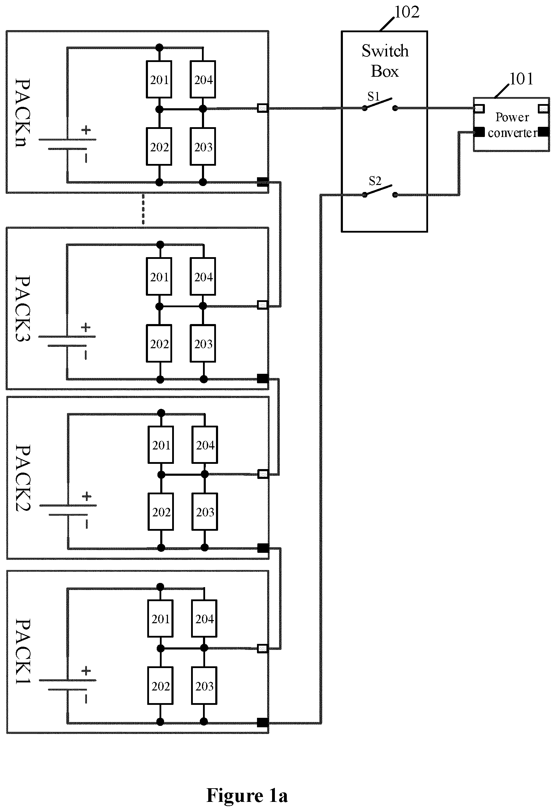

Reference is made to Figure 1a, which shows battery modules, such as PACK1, PACK2, PACK3, ..., and PACKn. As an example, the n^{th} battery module, i.e., PACKn, comprises a battery body, a main-path connection controlling circuit 201, a bypass connection controlling circuit 202, and at least one buffer circuit (203 and/or 204, as shown in Figure 1a).

The battery body is connected to a positive terminal or a negative terminal of the battery module via the main-path connecting controlling circuit 201. The bypass connection controlling circuit 202 is connected between the positive terminal and the negative terminal of the battery module.

During normal operation, the main-path connection controlling circuit 201 is closed, the bypass connection controlling circuit 202 is open, and the corresponding battery body is thus connected into a power path of the corresponding battery cluster in the system. When the battery module meets a predetermined condition for disconnection, e.g., being fully charged, being fully discharged, being abnormal, or being faulty, the bypass connection controlling circuit 202 is switched to be closed, and the main-path connection controlling circuit 201 is switched to be open, such that the battery module can be disconnected from the power path. When the battery module meets the predetermined condition for connection, e.g., all battery modules being required to perform a uniform operation, settings defining fully charging or fully discharging being changed, a fault being repaired, or a new battery module being put into operation, the bypass connection controlling circuit 202 is switched to be open, and the main-path connection controlling circuit 201 is switched to be closed, such that the battery module can be connected into the power path again.

That is, when meeting the corresponding predetermined condition, the battery mode may be connected into or disconnected from the system through the open/closed state of the main-path connection controlling circuit 201 and the open/closed state of the bypass connection controlling circuit 202. Thereby, the battery modules currently connected to the system can be adjusted in real time, and only the battery module(s) not meeting the predetermined condition continue participating in the current operating mode, e.g., a charging mode or a discharging mode. Hence, all battery modules in the battery cluster can meet the predetermined condition gradually, and finally reach the same status, e.g., achieve balanced SOC. In such case, adjustment of the connecting the battery modules into this battery cluster can be terminated. Moreover, little power in the battery module having higher SOC dissipates as heat in such solution, and hence less energy is wasted. In addition, regardless of active balancing or passive balancing, a balancing current in conventional power storage systems has magnitude of milliamperes, which results in low balancing speed and long balancing time. Herein the balancing speed of the power storage system is increased by at least 10 times through the foregoing process.

In practice, when any battery module in the battery cluster is connected into or disconnected from the power path, there would be a difference between a voltage across the battery cluster and a voltage across a bus capacitor at a direct current (DC) side of a power converter 102, because the bus capacitor cannot change abruptly. In a case that the battery module is directly connected or disconnected, there would be a voltage spike in the current flowing through the battery cluster, and hence devices bearing such current would be subject to voltage/current stress, which causes safety risks. The buffer circuit is capable to buffer an abrupt power change generated when the battery module is connected into or disconnected from the system. When any battery module is connected into or discontented from the power path, the devices in the corresponding battery cluster would have little voltage/current stress, which improves safety.

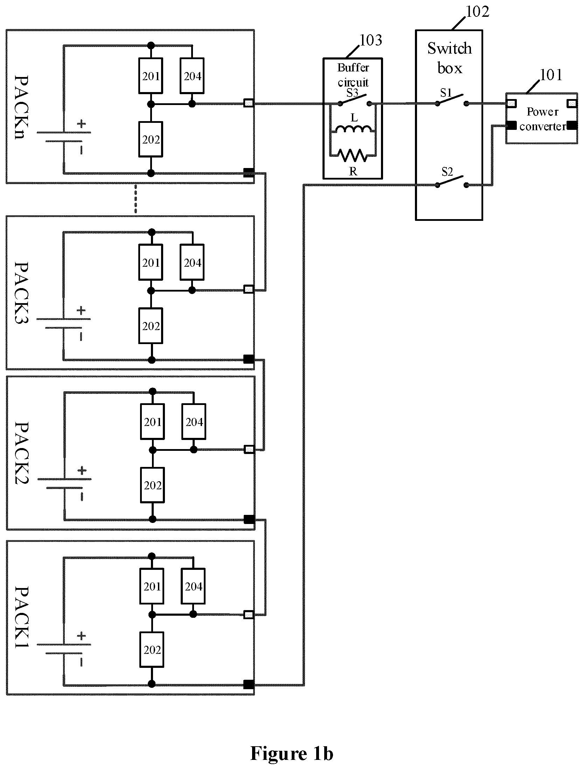

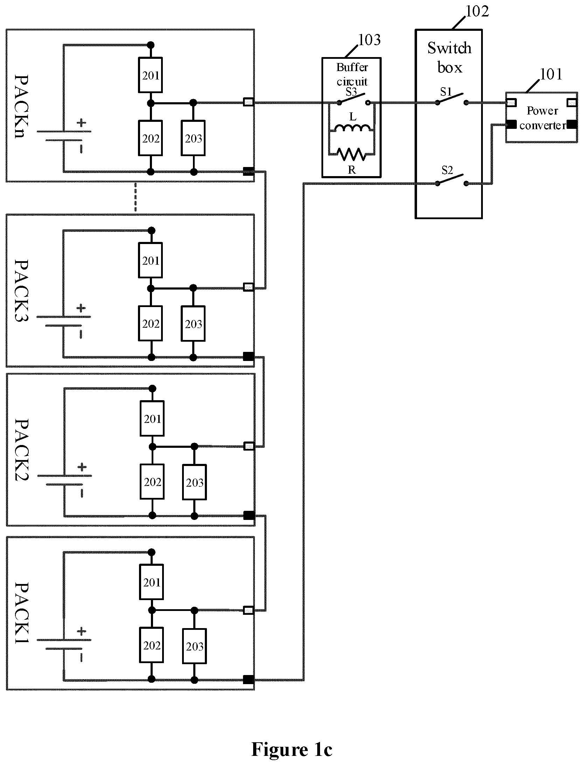

In practice, there may be two buffer circuits in the battery module, i.e., the main-path buffer circuit 204 connected in parallel with the main-path connection controlling circuit 201, and the bypass buffer circuit 203 connected in parallel with the bypass connection controlling circuit 202, as shown in Figure 1a. The main-path buffer circuit 204 is configured to buffer the abrupt power change when the battery module is connected into the system, and the bypass buffer circuit 203 is configured to buffer the abrupt power change when the battery module is disconnected from the system. Alternatively, there may be only one buffer circuit, i.e., either the main-path buffer circuit 204 or the bypass buffer circuit 203 as shown in Figure 1a. In a case that the battery module comprises only the main-path buffer circuit 204, the battery module is capable to buffer the abrupt power change when being connected into the system via the main-path buffer circuit 204, as shown in Figure 1b. When the battery module needs to be disconnected from the system, a bus buffer circuit 103 for the system is required to be configured for buffering the corresponding abrupt power change. In a case that the battery module comprises only the bypass buffer circuit 203, the battery module is capable to buffer the abrupt power change when it is disconnected from the system by using the bypass buffer circuit 203. When the battery module needs to be connected into the system, a bus buffer circuit 103 for the system is required to be configured for buffering the corresponding abrupt power change, as shown in Figure 1c. Details may refer to following embodiments that describe the power storage system.

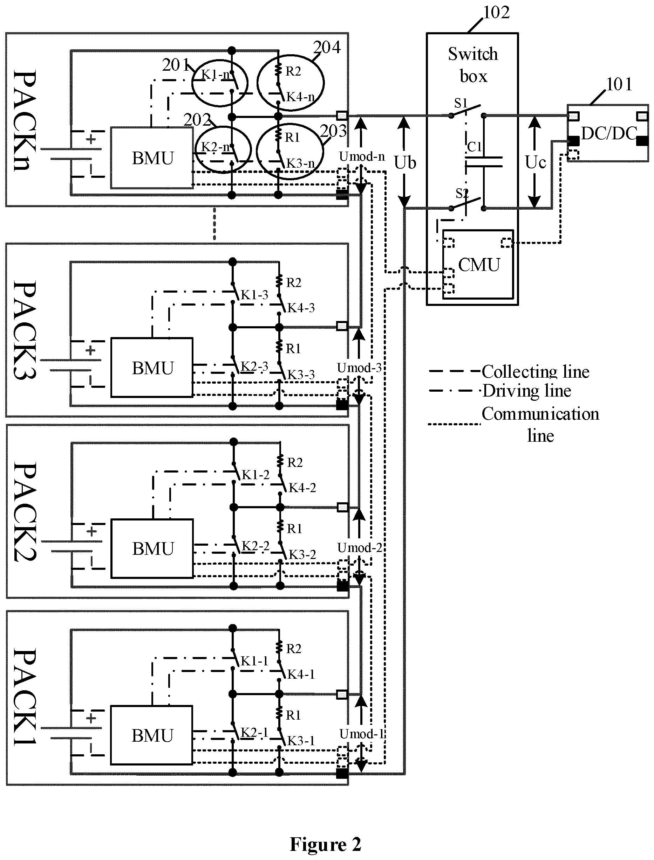

Reference is made to Figure 2. In one embodiment, each of the main-path buffer circuit 204 and the bypass buffer circuit 203 comprises a buffer apparatus and a controllable switch which are connected in series. The buffer apparatus may be a resistor, and a quantity number of the resistor(s) is not limited. There may be two or more resistors that are connected in series and/or parallel. It is appreciated that the buffer apparatus may be in another form that can buffer the abrupt power change, for example, may be an inductor or a capacitor. A specific form may be determined according an actual situation, and all forms shall fall within protection scope of the present disclosure.

The main-path buffer circuit 204 comprises a buffer apparatus R2 and a controllable switch (K4-1, K4-2, K4-3, ..., or K4-n, as shown in Figure 2) that are connected in series. The bypass buffer circuit 203 comprises a buffer apparatus R1 and a controllable switch (K3-1, K3-2, K3-3, ..., or K3-n, as shown in Figure 2) that are connected in series.

When the battery module is disconnected from the power path, the controllable switch K3-n is closed to buffer the abrupt power change. After the disconnection is completed, power in the system tends to recover a stable state, and the difference between the voltage Ub across the battery cluster and the voltage Uc across the corresponding bus capacitor C1 falls below a certain threshold. At such time, the controllable switch K3-n is opened. When the battery module is connected into the power path, the controllable switch K4-n is closed to buffer the abrupt power change. After the connection is completed, power in the system tends to recover a stable state, and the difference between the voltage Ub and the voltage Uc falls below a certain threshold. At such time, the controllable switch K4-n is opened.

Reference is further made to Figure 2 on a basis of the foregoing embodiment(s). Each of the main-path connection controlling circuit 201 and the bypass connection controlling circuit 202 may comprise a double-pole switch with a single path, e.g., a relay.

The double-pole switch in the main-path connection controlling circuit 201 (K1-1, K1-2, K1-3, ..., or K1-n, as shown in Figure 2) are switched on under control, so as to charge or discharge the battery body. The double-pole switch in the bypass connection controlling circuit 202 (K2-1, K2-2, K2-3, ..., or K2-n, as shown in Figure 2) are turned on under control, so as to implement a charging bypass or a discharging bypass for the battery body.

A delay in a control signal may be inevitable when either of the main-path connection controlling circuit 201 and the bypass connection controlling circuit 202 is switched from being closed to being open. Hence, in practice, there may be a moment at which such controlling circuit and the buffer circuit connected in series with it are both closed, which results in a short circuit of the battery body and introduces a safety risk. When such controlling circuit is disconnected, there may be a certain delay after the disconnection before closing the buffer circuit connected in series. That is, a dead band is introduced into the control.

Reference is further made to Figure 2. In practice, the battery module may further comprise a battery management unit (BMU). The BMU is configured to monitor a parameter of the battery body, e.g., a voltage and a current, so as to control the open/closed state of the main-path connection controlling circuit 201, the open/closed state of bypass connection controlling circuit 202, the open/closed state of main-path buffer circuit 204, and the open/closed state of bypass buffer circuit 203. Moreover, the BMU is further configured to connect an external device in communication, such as implement communication connection with another BMU or a cell monitor unit of the battery cluster to which it belongs.

A power storage system is provided according to another embodiment of the present disclosure. Reference is made to Figure 1a to Figure 2. The power storage system comprises a control unit, at least one battery cluster, and at least one power converter 102.

The battery cluster comprises multiple battery modules, each of which is the one illustrated in the above embodiments (such as PACK1, PACK2, PACK3, ..., PACKn, as shown in Figure 1a to Figure 2). All the battery modules are connected in series to form a serial connection, and two terminals of the serial connection are connected to a direct current bus of the corresponding power converter 102.

In practice, a switch box 103 may be connected between all battery clusters and the corresponding power converter 102. Main circuit switches S1 and S2 are provided inside the switch box 103, so as to implement connection and disconnection between the battery cluster and the power converter 102.

A bus capacitor C1 is connected between a positive line and a negative line of the direct current bus. The bus capacitor C1 may be a supporting capacitor at a DC part of the power converter 102, or may be an additional capacitor independent from the power converter 102. The additional capacitor may be arranged inside the switch box 103 (as shown in Figure 2). A specific configuration may depend on an actual scenario, and all configurations fall within the protection scope of the present disclosure.

Each battery cluster may have one of following configurations, so as to buffer the abrupt power change generated when the battery module is connected into or disconnected from the system.

A first configuration is as shown in Figure 1a. Each battery module comprises two buffer circuits, i.e., the main-path buffer circuit 204 and the bypass buffer circuit 203.

A second configuration is as shown in Figure 1b. Each battery module comprises only one buffer circuit, i.e., the main-path buffer circuit 204. At least one bus buffer circuit 103 is connected between the battery cluster and the power converter.

A third configuration is as shown in Figure 1c. Each battery module comprises only one buffer circuit, i.e., the bypass buffer circuit 203. At least one bus buffer circuit 103 is connected between the battery cluster and the power converter.

In the second configuration and the third configuration, the bus buffer circuit 103, may be connected on the direct current bus, for example, connected between the battery cluster and the switch box 102, as shown in Figures 1b and 1c. Alternatively, the bus buffer circuit 103 may be connected between the positive line and the negative line of the direct current bus and in series with the bus capacitor C1 (not depicted). That is, the bus buffer is connected to any terminal of the bus capacitor C1 and is between the positive line and the negative line the switch box 102. A specific configuration may depend on an actual scenario, and all configurations fall within the protection scope of the present disclosure.

Reference is further made to Figure 1b and Figure 1c. In an embodiment, the bus buffer circuit 103 comprises a bus controllable switch S3 and a bus buffer apparatus that are connected in parallel. In a case that the battery module does not comprise the main-path buffer circuit, the bus controllable switch S3 is switched off when the battery module is connected into the power path of the corresponding battery cluster. In a case that the battery module does not comprise the bypass buffer circuit, the bus controllable switch S3 is switched off when the battery module is disconnected from the power path of the corresponding battery cluster. When the difference between the voltage across the battery cluster and the voltage across the bus capacitor is less than a predetermined difference, the bus controllable switch S3 is switched on. In practice, the bus controllable switch S3 and the main-path switch S1 on a corresponding line in the switch box may be two different switches, as shown in Figures 1b and 1c, or may be the same switch. That is, in practice, the main circuit switch S1 may be reused as the bus controllable switch S3. A specific configuration may depend on an actual scenario, and all configurations fall within the protection scope of the present disclosure.

In an embodiment, the bus buffer apparatus may be a resistor R or an inductor L. In practice, only using the inductor L would suffer from magnetic saturation, and hence generally the resistor R and the inductor L are connected in parallel in actual application (as shown in Figure 1b and Figure 1c). A specific configuration may depend on an actual scenario, and all configurations fall within the protection scope of the present disclosure.

The power storage system may comprise multiple structures, each of which is as shown in Figure 1a to Figure 1c. In such case, each power converter 102 may be a direct current to alternating current (DCAC) converter, and an alternating current (AC) side of the DCAC converter is connected to a grid and/or a load. Alternatively, each power converter 102 may also be a direct current to direct current (DCDC) converter. The DCDC converters may converge into a DC side of an inverter of a photovoltaic power generation system, or may be connected to a grid and/or a load via a DCAC converter in the power storage system.

Regardless the structure, the control unit of the power storage system is capable to control each battery module to be connected into or disconnected from the corresponding battery cluster, when the predetermined conditions are met.

In practice, the control unit may be a battery management system (BMS). In one embodiment, the BMS comprises a system management unit (SMU), a cluster management unit (CMU) for each battery cluster, and the BMU in each battery module.

The SMU, CMU, and BMU are connected in hierarchical communication. The CMU is connected with the power converter 102 in communication. As shown in Figure 2, in each battery cluster, all BMUs and the CMU are connected in serial communication. Actual implementations are not limited thereto, as along as each BMU is capable to communicate with the corresponding CMU and each CMU is capable to communicate with the SMU. The CMU controls each BMU, so to adjust the battery modules connected into the power path of the corresponding battery cluster. Thereby, all battery modules in each battery cluster can reach the same status through the principle of the solution provided herein.

In practice, the main circuit switches S1 and S2 in the switch box 103 may be controlled by the CMU of the corresponding battery cluster. Hence, through its CMU, the battery cluster can monitor parameters, connect or disconnect battery modules, control buffer apparatuses, control current operating elements, control a charging mode and a discharging mode, and the like. The CMU may be arranged in the switch box 103, which is not limited herein.

A method for controlling a power storage system is further provided according to another embodiment of the present disclosure. The method is applicable to the control unit in the power storage system as described in any foregoing embodiment. A specific structure and a principle of the power storage system may refer to the foregoing embodiments, and would not be repeated herein.

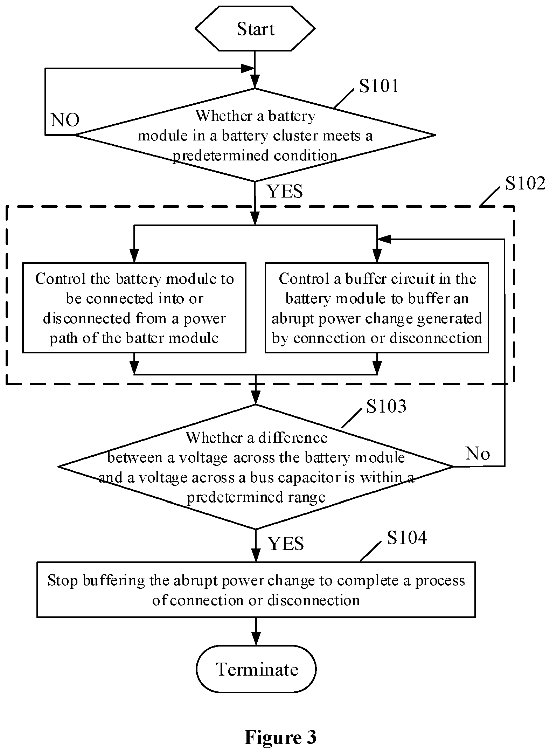

As shown in Figure 3, the method comprises steps S101 and S102.

In step S101, it is determined whether each battery module in a battery cluster of the power storage system meets a predetermined condition.

The predetermined condition may be a predetermined condition for connection or a predetermined condition for disconnection.

The predetermined condition for disconnection may be any following conditions. (1) A first predetermined condition indicates that an operating parameter of a battery module reaches a predetermined upper limit when the battery cluster is being charged. That is, the first predetermined condition is met when a battery is fully charged first. (2) A second predetermined condition indicates that an operating parameter of a battery module reaches a predetermined lower limit when the battery cluster is being discharged. That is, the second predetermined condition is met when a battery is fully discharged first. (3) A third predetermined condition for disconnection indicates that a battery module is abnormal or faulty. That is, the third predetermined condition is met when a battery module is faulty or needs to be replaced with a new battery module. Herein the operating parameter may be a voltage, a SOC, a state of health (SOH), average temperature, etc., which is not specifically limited herein. A specific configuration may depend on an actual scenario, and all configurations fall within the protection scope of the present disclosure.

The predetermined condition for connection is met, when settings defining the fully charging or fully discharging are changed, when the faulty battery module has been repaired, or when a new battery module needs to be connected into the power path. For example, all battery modules have been adjusted to a same state first when an operation mode of the battery cluster is changed, e.g., from a charging mode to a discharging mode or vice versa. In such case, the predetermined condition for connection is regarded as being met. A specific configuration may depend on an actual scenario, and all configurations fall within the protection scope of the present disclosure.

The process proceeds to step S102 in a case that there is a battery module meeting the predetermined condition.

In step S102, the battery module is controlled to be connected into or disconnected from the power path of the battery cluster, and the main-path buffer circuit or the bypass buffer circuit in the battery module is controlled to buffer the abrupt power change generated when the battery module is connected into or disconnected from the power path.

As shown in Figure 1a, each battery module comprises the main-path connection controlling circuit, the bypass connection controlling circuit, the main-path buffer circuit, and the bypass buffer circuit. The main-path connection controlling circuit and the bypass connection controlling circuit each comprises the double-pole switch with the single path. When the battery module is disconnected from the power path, the double-pole switch in the main-path connection controlling circuit is switched off, and simultaneously or after a certain delay, the controllable switch in the bypass buffer circuit is switched on to buffer the abrupt power change. When the battery module is connected into the power path, the double-pole switch in the bypass connection controlling circuit is switched off, and simultaneously or after a certain delay, the controllable switch in the main-path buffer circuit is switched on to buffer a voltage spike.

As shown in Figure 1b, each battery module comprises the main-path connection controlling circuit, the bypass connection controlling circuit, and the main-path buffer circuit. The bus buffer circuit is connected between the battery cluster and the power converter, and the main-path connection controlling circuit and the bypass connection controlling circuit each comprises the double-pole switch with the single path. When the battery module is disconnected from the power path, the double-pole switch in the corresponding main-path connection controlling circuit is switched off, and simultaneously or after a certain delay, the bus controllable switch in the bus buffer circuit is switched off to prepare for buffering the abrupt power change. Then, the double-pole switch of the bypass connection controlling circuit is switched on. When the battery module is connected into the power path, the double-pole switch of the bypass connection controlling circuit is switched off, and simultaneously or after a certain delay, the controllable switch in the main-path buffer circuit is switched on to buffer a voltage spike.

As shown in Figure 1c, each battery module comprises the main-path connection controlling circuit, the bypass connection controlling circuit, and the bypass buffer circuit. The bus buffer circuit is connected between the battery cluster and the power converter, and the main-path connection controlling circuit and the bypass connection controlling circuit each comprises the double-pole switch with the single path. When the battery module is disconnected from the power path, the double-pole switch of the main-path connection controlling circuit is switched off, and simultaneously or after a certain delay, the controllable switch of the bypass buffer circuit is switched on to buffer the abrupt power change. When the battery module is connected into the power path, the double-pole switch of the bypass connection controlling circuit is switched off, and simultaneously or after a certain delay, the bus controllable switch in the bus buffer circuit is switched off to prepare for buffering the abrupt power change. Then, the controllable switch of the main-path buffer circuit is switched on.

In the method provided herein, switching of a switch array in the corresponding battery module and operation of the buffer circuit are logically controlled when the battery module is disconnected from or connected into the power path. Thereby, a voltage/current spike that may appear at main switching devices due to the switching operation can be effectively suppressed, and the abrupt power change due to voltage variations can be buffered.

Reference is further made to Figure 3. In practice, the control method may further comprise steps S 103 after the step S102.

In step S103, it is determined a difference between the voltage across the battery cluster and the voltage across the bus capacitor is within a predetermined range.

Reference is made to Figure 1a to Figure 1c. In a case that the difference between the voltage Ub across the battery cluster and the voltage Uc across the corresponding bus capacitor is not within the predetermined range, the buffer circuit continues functioning to buffer the abrupt power change. In a case that the difference is within the predetermined range, the process proceeds to step S104.

In step S104, buffering the abrupt power change is stopped, and thereby a process of connecting the battery module to the power path or disconnecting the battery module from the power path is completed.

For the structure as shown in Figure 1a, the step S104 comprises following steps when the predetermined condition is the predetermined condition for disconnection. The double-pole switch in the bypass connection controlling circuit is switched on. Then, the controllable switch in the bypass buffer circuit is switched off. Alternatively, the controllable switch in the bypass buffer circuit may not be switched off until a moment before next time the double-pole switch in the bypass connection controlling circuit is switched off. In such case, a moment of switching off the controllable switch in the bypass buffer should be at least prior to a moment of switching on the double-pole switch in the main-pass connection controlling circuit is switched on. The step S104 comprises following steps when the predetermined condition is the predetermined condition for connection. The double-pole switch in the main-path connection controlling circuit is switched turned on. Then, the controllable switch in the main-path buffer circuit is switched off. Similarly, the controllable switch in the main-path buffer circuit may be alternatively not switched off until a moment before next time the double-pole switch in the main-path connection controlling circuit is switched off. In such case, a moment of switching off the controllable switch in the main-path buffer circuit should be at least prior to a moment of switching on the double-pole switch in the bypass connection controlling circuit is switched on.

It is assumed that the n^{th} battery module PACKn as shown in Figure 2 is to be disconnected from the power path. After K1-n is switched on and K3-n is switched off in the step S102, there is scarcely any current on the direct current bus when the voltage Uc across the bus capacitor C1 and the voltage Ub across the battery cluster reach a balanced state gradually. In such case, a voltage difference between two terminals of the resistor R1 is very small, and hence K2-n can be switched on at such time without generating an arc. R1 is bypasses after K2-n is switched on, and hence buffering on the abrupt power change is stopped. In practice, K3-n may be switched off after K2-n is switched on, or may be switched off simultaneously with switching on K2-n. Thereby, operations of disconnecting from the power path are completed. Operations of connecting into the power path can be obtained by analogy and would not be illustrated herein.

For the structure as shown in Figure 1b, the step S104 comprises a following step when the predetermined condition is the predetermined condition for disconnection. The bus controllable switch S3 is switched on to bypass the bus buffer apparatus. The step S104 comprises following steps when the predetermined condition is the predetermined condition for connection. The double-pole switch in the main-path connection controlling circuit is switched on, and then the controllable switch in the main-path buffer circuit is switched off at appropriate time.

For the structure shown in Figure 1c, the step S104 comprises following steps when the predetermined condition is the predetermined condition for disconnection. The double-pole switch in the bypass connection controlling circuit is switched on, and then the controllable switch in the bypass buffer circuit is switched off at appropriate time. The step S104 comprises a following step when the predetermined condition is the predetermined condition for connection. The bus controllable switch S3 is switched on to bypass the bus buffer apparatus.

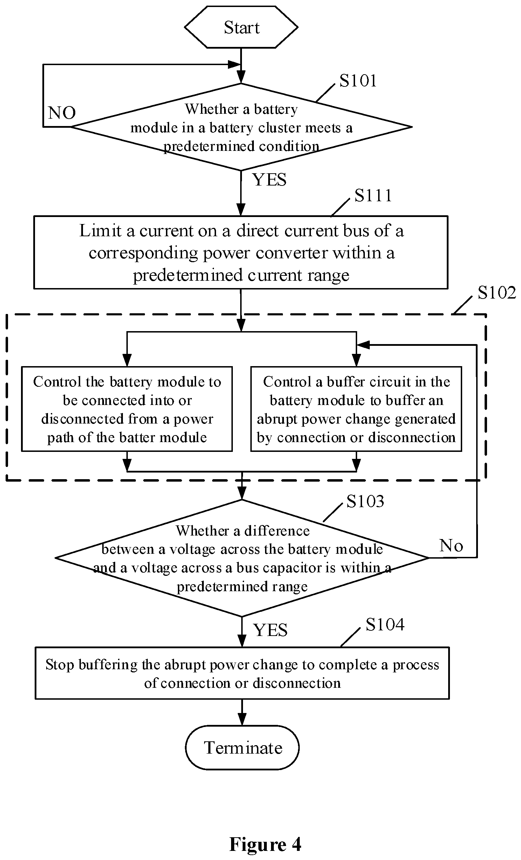

When the battery module is to be connected into or disconnected from the power path, a voltage between two terminals of the battery should be prevented from changing abruptly, so as avoid generating an art. Hence, it is necessary to use the above process for waiting that Ub and Uc are substantially identical. In a case that the power converter is always operating, there may always be a current on the direct current bus between the power converter and the battery cluster. In such case, there is a large voltage difference between the two terminals of the buffer apparatus (e.g., R1) when the double-pole switch (e.g., K2-n) connected in parallel with the buffer circuit is switched on. Hence, the corresponding switching operation may still generate the art when the battery module is operating with a loaded, that is, a risk of arcing still exists. Reference is made to Figure 4. The method may further comprise step S111, which is executed first when it is determined that the battery module meets the predetermined condition in step S101. Thereby, the current on the DC bus is limited within a predetermined range, e.g., a range around zero, or even limited to be zero, and then the process proceeds to the step S102.

In step S 111, a current on the DC bus connected to the power converter in the power storage system is limited within a predetermined current range.

In practice, this step S111 may comprises following steps.

The current on the DC bus is controlled to be lowered into the predetermined current range.

The power converter is controlled to lock transistors in it. In such case, when the power storage system is charged or discharged, the operations of connecting into the power path or disconnecting from the power path need not switch off the main-path switch(es) in the switch box. In practice, the corresponding main circuit switch(es) may alternatively be switched off. A specific configuration may depend on an actual scenario, and all configurations fall within the protection scope of the present disclosure.

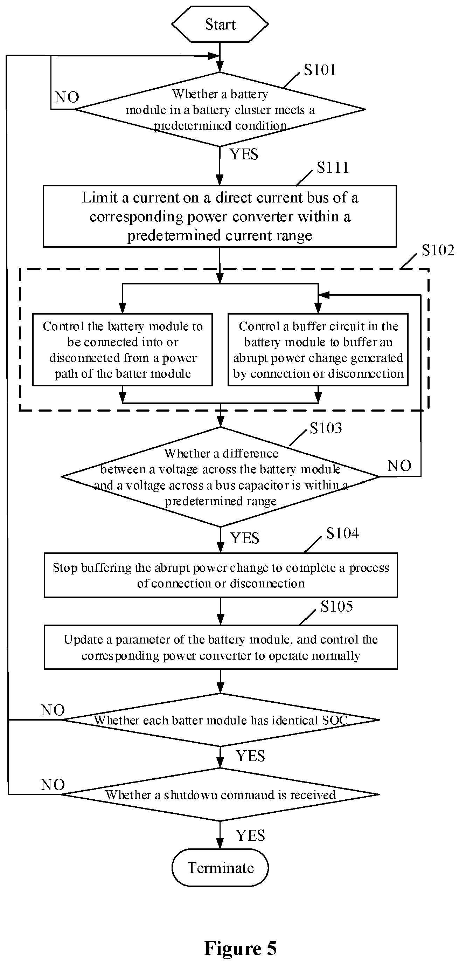

Reference is made to Figure 5, which is depicted on a basis of Figure 4 as an example. In an embodiment based on the foregoing embodiment(s), the method further comprises step S105 after the step S104.

In step 105, a parameter of the battery cluster is updated, and the corresponding power converter is controlled to operate normally.

The steps S101 to S105 are cycled repeatedly until each battery module in each battery cluster meet the corresponding predetermined conditions.

For example, in a scenario of charging/discharging, each time a battery module is disconnected from the power path, a quantity of connected battery modules in the battery cluster, a voltage of each battery module, and a voltage of the system may be updated. Thereby, the charging/discharging can be continued, and remaining battery modules are in turn disconnected from the power path. After the SOC of each battery module is identical, the battery system may be shut down and stop operating in response to a shutdown command. Other situations may be deduced by analogy and would not be illustrated herein.

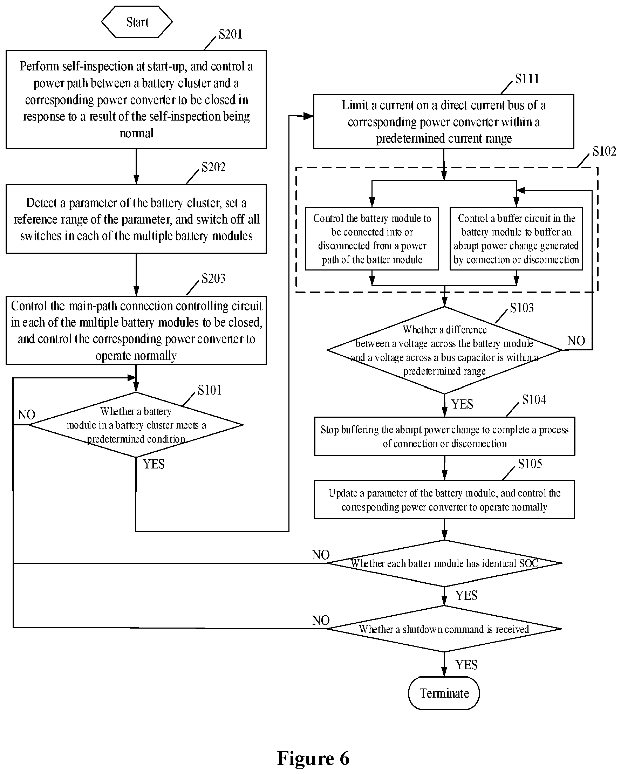

The control method may further be as shown in Figure 6. That is, the method further comprises steps S201 to S203 before the step S101.

In step S201, self-inspection is performed at start-up, and a power path between the battery cluster and the corresponding power converter is controlled to be closed in response to a result of the self-inspection being normal.

In step S202, a parameter of the battery cluster is detected, a reference range of the parameter is set, and all switches in each of the multiple battery modules are switched off.

In step S203, the main-path connection controlling circuit in each of the multiple battery modules is controlled to be closed, and the corresponding power converter is controlled to operate normally.

An operating mode is the charging mode or the discharging mode when the power converter operates normally.

In a case that the control unit is the BMS, the method may be implemented by a management of any level in the BMS. Hereinafter the CMU is taken as an example of a subject performing the method in conjunction with the structure as shown in Figure 2.

The system starts up, and self-inspection is performed through the CMU and the BMU(s). Specifically, a quantity n of the battery modules connected in the power path is detected, voltages of the battery modules (Umod_1, Umod_2, Umod_3, ..., and Umod_n, as shown in Figure 2), and a voltage Vsys of the system are detected. All switches in the battery module (e.g., K1-n, K2-n, K3-n, and K4-n in PACKn) are switched off. The SOC of the battery module can be determined based on the voltage of the battery module, e.g., Umod_n. When a status of each battery module is normal, the CMU switches on the main circuit switches S1 and S2.

The CMU issues an activating command, so as to control each BMU to switch on the double-pole switch in the main-path connection controlling circuit 201(e.g., K1-n in PACKn) while switching off other switches.

Then, the CMU calibrates and obtains SOC information of each battery module according to a relationship OCV_SOC between the voltage and the SOC, and informs the power converter 102 of a charging/discharging limiting current Icn.
(1) During normal charging, as voltages of the battery modules increase, the m^{th} battery module PACKm first reaches a predetermined upper limit Vmodmax for the voltage or reaches a set upper threshold for SOC while the voltages of the other battery modules are less than Vmodmax. At such time, the m^{th} battery module PACKm needs to be bypassed, that is, need to be disconnected from the main power path, and the remaining modules that are not fully charged need to be further charged.

During the charging, control logic for the m^{th} battery module PACKm is as follows.

First, a charging current of the power converter 102 is reduced to zero, and transistors in the power converter 102 are locked. Then, the controllable switch K3-m in the bypass buffer circuit 203 is switched on through the BMU of the m^{th} battery module PACKm, such that the buffer apparatus is connected into the main power path. Simultaneously, the double-pole switch K1-m in the main-path connection controlling circuit 201 is switched off. Since the voltage Ub across the battery cluster is lowered by a voltage of one batter module relative to the voltage Uc across the bus capacitor C1, the resistor R1 is capable to buffer the abrupt power change generated when switching off K1-m. After the buffer circuit functions, a voltage across the resistor R1, that is, a difference between Ub and Uc, is lowered smaller than a certain threshold, and then K2-m is switched on through the BMU, such that the battery module and the buffer circuit are bypassed. K3-m is switched off. Thereby, operations of disconnecting the battery module from the main power path are completed.

After the disconnection, the power converter 102 continues to charge the remaining n-1 battery modules. The CMU updates a parameter, such as a quantity of modules connected in the main power path and a voltage of each battery module, and continues to charge the remaining battery modules via the power converter 102. The similar control logic is applied until all battery modules have reached the predetermined upper limit Vmodmax or the set upper threshold for SOC.

(2) During the normal discharging, as voltages of the battery module decrease, the m^{th} battery module PACKm first reaches a predetermined lower limit Vmodmin for the voltage or reaches a set lower threshold for SOC while the voltages of the other battery modules are higher than Vmodmax. At such time, the m^{th} battery module PACKm needs to be bypassed, that is, need to be disconnected from the main power path, and the remaining modules that are not fully discharged need to be further discharged.

During the discharging, control logic for the m^{th} battery module PACKm is as follows.

First, a charging current of the power converter 102 is reduced to zero, and transistors in the power converter 102 are locked. Then, the controllable switch K3-m in the bypass buffer circuit 203 is switched on through the BMU of the m^{th} battery module PACKm, such that the buffer apparatus is connected into the main power path. Simultaneously, the double-pole switch K1-m in the main-path connection controlling circuit 201 is switched off. Since the voltage Ub across the battery cluster is lowered by a voltage of one batter module relative to the voltage Uc across the bus capacitor C1, the resistor R1 is capable to buffer the abrupt power change generated when switching off K1-m. After the buffer circuit functions, a voltage across the resistor R1, that is, a difference between Ub and Uc, is lowered smaller than a certain threshold, and then K2-m is switched on through the BMU, such that the battery module and the buffer circuit are bypassed. K3-m is switched off. Thereby, operations of disconnecting the battery module from the main power path are completed.

After the disconnection, the power converter 102 continues to discharge the remaining n-1 battery modules. The CMU updates a parameter, such as a quantity of modules connected in the main power path and a voltage of each battery module, and continues to discharge the remaining battery modules via the power converter 102. The similar control logic is applied until all battery modules have reached the predetermined lower limit Vmodmin or the set lower threshold for SOC.

(3) Control logic for disconnecting a faulty module may be as follows. Operations for disconnecting a battery module from the main power path are executed when the system determines that the battery module is abnormal or faulty and thus needs to be disconnected.

In case of abnormity or a fault, the control logic for the m^{th} battery module PACKm is as follows.

First, a charging current of the power converter 102 is reduced to zero, and transistors in the power converter 102 are locked. Then, the controllable switch K3-m in the bypass buffer circuit 203 is switched on through the BMU of the m^{th} battery module PACKm, such that the buffer apparatus is connected into the main power path. Simultaneously, the double-pole switch K1-m in the main-path connection controlling circuit 201 is switched off. Since the voltage Ub across the battery cluster is lowered by a voltage of one batter module relative to the voltage Uc across the bus capacitor C1, the resistor R1 is capable to buffer the abrupt power change generated when switching off K1-m. After the buffer circuit functions, a voltage across the resistor R1, that is, a difference between Ub and Uc, is lowered smaller than a certain threshold, and then K2-m is switched on through the BMU, such that the battery module and the buffer circuit are bypassed. K3-m is switched off. Thereby, operations of disconnecting the battery module from the main power path are completed.

In a case that the power storage system is still required to operate, the power converter 102 is controlled to continue charging or discharging the remaining n-1 battery modules according to the current operating mode.

(4) Control logic for connecting a new module may be as follows. Operations for connecting a battery module into the main power path are executed when the system determines that the battery module needs to be connected into the system.

The control logic for the m^{th} battery module PACKm is as follows.

First, a charging current of the power converter 102 is reduced to zero, and transistors in the power converter 102 are locked. Since K2-m of the battery module PACKm has been switched on before the connection, K4-m is controlled to be switched on, and then K2-m is switched off, through the corresponding BMU. Since the voltage Ub across the battery cluster is increased by a voltage of one battery module relative to voltage Uc across the bus capacitor, the resistor R2 is capable to buffer the abrupt power change generated when switching off K2-m. After the buffer circuit functions, a voltage across the resistor R2, that is, a difference between Ub and Uc, is lowered smaller than a certain threshold, and then K1-m is switched on through the BMU, such that the battery module and the buffer circuit are bypassed. K4-m is switched off. Thereby, operations of connecting the battery module into the main power path are completed.

After the connection, the CMU updates a parameter, such as a quantity of modules connected in the main power path and a voltage of each battery module, and continues to discharge/charge the remaining battery modules via the power converter 102. The similar control logic is applied until all battery modules have been recovered.

Using the structure shown in Figure 1a, it is not necessary to switch off the main circuit switch(es) in the switch box. When a battery module is fully discharged, fully charged, faulty, or newly added, it can be disconnected from or connected into the main power path of the battery cluster, and achieve fast and smooth connection/disconnection under help of the buffer circuit. That is, operations of the connection/disconnection are completed through controlling corresponding modules, and multiple switching between different units is not necessary. The control is simplified, time consumption of connecting/disconnecting the modules is reduced, and hence standby duration of the system is shortened.

Moreover, SOC calculation of the battery modules is a basis for controlling the system. Herein the SOCs are evaluated through a distributed or centralized scheme, such that the SOC of each battery module is calculated separately. Each battery module can be independently controlled according to its own SOC. Addressed is an issue that in conventional algorithms, all modules are forced into the same SOC through calibration after the SOC of one module indicates fully charging or fully discharging.

In addition, conventional battery modules are manufactured by different manufacturers, and are subject to different production batches, battery inconsistency issues, and the like. Hence, complex operations of power replenishment are necessary before expanding a system or replacing a module, so that the SOC of the new battery module is kept consistent with the system SOC. The operations and a maintenance process are cumbersome and complicated, and cannot address the "bucket effect" between the old and new battery modules. Herein the method utilizes independent control on each battery module, and hence addresses the above issue in power replenishment operations for system expansion or module replacement. Thereby, "replace and use" of the battery module can be achieved.

The embodiments of the present disclosure are described in a progressive manner, and each embodiment places emphasis on the difference from other embodiments. Therefore, one embodiment can refer to other embodiments for the same or similar parts. Since the systems disclosed in the embodiments correspond to the methods disclosed in the embodiments, the description of the systems is simple, and reference may be made to the relevant part of the methods. The foregoing systems and the system embodiments are only illustrative. Units described as separate components may or may not be physically separated. Components shown as units may or may not be physical units, that is, these components may be located in one place or may be distributed among multiple network units. Some or all modules may be selected based on an actual requirement to implement an objective of a solution in an embodiment. Those skilled in the art may understand and implement the above description without any creative effort.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation should not be considered to depart from the scope of the present disclosure.

According to the description of the disclosed embodiments, those skilled in the art can implement or use the present disclosure. Various modifications made to these embodiments may be obvious to those skilled in the art, and the general principle defined herein may be implemented in other embodiments without departing from the spirit or scope of the present disclosure. Therefore, the present disclosure is not limited to the embodiments described herein but conforms to a widest scope in accordance with principles and novel features disclosed in the present disclosure.

## Claims

1. A battery module, comprising:
a battery body,
a main-path connection controlling circuit,
a bypass connection controlling circuit, and
at least one buffer circuit, wherein:
the battery body is connected to a positive terminal or a negative terminal of the battery module via the main-path connection controlling circuit, and the bypass connection controlling circuit is connected between the positive terminal and the negative terminal of the battery module;
the battery module is configured to be connected into or disconnected from a system through an closed-or-open state of the main-path connection controlling circuit and an closed-or-open state of the bypass connection controlling circuit, in response to the battery module meeting a predetermined condition; and
the at least one buffer circuit each is connected in parallel with the main-path connection controlling circuit or the bypass connection controlling circuit, and is configured to buffer an abrupt power change generated when the battery module is connected into or disconnected from the system.

2. The battery module according to claim 1, wherein:
a quantity of the at least one the buffer circuits is 2, and the at least one the buffer circuits comprises a main-path buffer circuit or a bypass buffer circuit; or
a quantity of the at least one the buffer circuits is 2, and the at least one the buffer circuits comprises a main-path buffer circuit and a bypass buffer circuit respectively;
wherein the main-path buffer circuit is connected in parallel with the main-path connection controlling circuit, and is configured to buffer the abrupt power change when the battery module is connected into the system; and
wherein the bypass buffer circuit is connected in parallel with the bypass connection controlling circuit, and is configured to buffer the abrupt power change when the battery module is disconnected from the system.

3. The battery module according to claim 2, wherein the main-path buffer circuit and the bypass buffer circuit each comprises:
a buffer apparatus and a controllable switch, which are connected in series;
wherein the controllable switch is closed in response to the battery module is connected into or disconnected from the system, and is open in response to the abrupt power change being over.

4. The battery module according to claim 3, wherein the buffer apparatus comprises a resistor.

5. The battery module according to any one of claims 1 to 4, wherein:
the main-path connection controlling circuit and the bypass connection controlling circuit each comprises a double-pole switch with a single path;
the double-pole switch of the main-path connection controlling circuit is configured to charge or discharge of the battery body when being closed under control; and
the double-pole switch of the bypass connection controlling circuit is configured to implement a charging bypass or a discharging bypass for the battery body when being closed under control.

6. The battery module according to any one of claims 1 to 4, further comprising a battery management unit (BMU), configured to:
monitor a parameter of the battery body;
control the closed-or-open state of the main-path connection controlling circuit, the closed-or-open state of the bypass connection controlling circuit, an closed-or-open state of the main-path buffer circuit, and an closed-or-open state of the bypass buffer circuit; and
connect an external device in communication.

7. A power storage system comprising:
a control unit,
at least one battery cluster, and
at least one power converter;
wherein for each of the at least one battery cluster:
said battery cluster comprises battery modules, each of which is the battery module according to any one of claims 1 to 6;
the battery modules are connected in series to form a serial connection, and two terminals of the serial connection are connected to a direct current (DC) bus of a corresponding power converter of the at least one power converter; and
the control unit is configured to control each of the battery modules to be connected into or disconnected from a power path of said battery cluster in response to said battery module meeting a predetermined corresponding condition.

8. The power storage system according to claim 7, wherein:
each of the battery modules comprises two buffer circuits, which are a main-path buffer circuit and a bypass buffer circuit; or
each of the battery modules comprises a buffer circuit, which is a main-path buffer circuit or a bypass buffer circuit, at least one bus buffer circuit is connected between said battery cluster and the corresponding power converter, and each of the at least one bus buffer circuit is connected on the DC bus or is connected in series with a bus capacitor between a positive line and a negative line of the DC bus.

9. The power storage system according to claim 8, wherein each of the at least one bus buffer circuit comprises:
a bus controllable switch and a bus buffer apparatus, which are connected in parallel, wherein:
the bus controllable switch is configured to be open in response to any of the battery modules being connected into the power path and each of the battery modules not comprising the main-path buffer circuit, or in response to any of the battery modules being disconnected from the power path and each of the battery modules not comprising the bypass buffer circuit; and
the bus controllable switch is configured to be closed in response to a difference between a voltage across said battery cluster and a voltage across the bus capacitor is less than a predetermined difference.

10. The power storage system according to claim 9, wherein the bus buffer apparatus comprises: a resistor, an inductor, or a resistor and an inductor that are connected in parallel.

11. The power storage system according to any one of claims 7 to 10, wherein:
a switch box is connected between each of the at least one battery cluster and the corresponding power converter, and the switch box comprises a main-path switch;
the power storage system comprises a bus buffer circuit, and the bus buffer circuit comprises a bus controllable switch and a bus buffer apparatus connected in parallel, and the bus controllable switch is identical to or different from the main-path switch connected on a corresponding line in the switch box.

12. The power storage system according to any one of claims 7 to 10, wherein:
the control unit is a battery management system (BMS), and the BMS comprises a system battery management unit (SMU), a cluster management unit (CMU) of each of the at least one battery cluster, and the BMU in each of the battery modules; and
the SMU, the CMU, and the BMU are connected in hierarchical communication, and the CMU is connected to the power converter in communication.

13. The power storage system according to any one of claims 7 to 10, wherein each of the at least one power converter is:
a direct-current-to-alternate-current (DCAC) converter, or
a direct-current-to-direct-current (DCDC) converter, wherein the DCDC converter is connected to one or both of a power grid and a load via a corresponding DCAC converter.

14. A method for controlling the power storage system according to any one of claims 7 to 13, comprising:
step S101, determining whether each of the battery modules in a battery cluster of the at least one battery cluster meets the predetermined condition; and
step S102, controlling a battery module of the battery modules to be connected into or discontented from the power path of the battery cluster, and controlling the at least one buffer circuit in the battery module to buffer the abrupt power change generated, when the battery module is connected into or discontented from the power path of the battery cluster, in response to the battery module meeting the predetermined condition.

15. The method according to claim 14, wherein:
the predetermined condition is a predetermined condition for connection or a predetermined condition for disconnection:
the predetermined condition for disconnection is one of:
a first condition, indicating that an operating parameter of the battery module reaches a predetermined upper limit when the battery cluster is being charged, wherein the operating parameter comprises a voltage, state of charge (SOC), state of health (SOH), or average temperature;
a second condition, indicating that the operating parameter of the battery module reaches a predetermined lower limit when the battery cluster is being discharged; and
a third condition, indicating that the battery module is abnormal or faulty.

16. The method according to claim 15, wherein the battery module comprises:
the main-path connection controlling circuit, the bypass connection controlling circuit, the main-path buffer circuit, and the bypass buffer circuit;
when the predetermined condition is the predetermined condition for disconnection, the step S102 comprises: switching the main-path connection controlling circuit to be open, and switching the corresponding bypass buffer circuit to be closed; and
when the predetermined condition is any one of the predetermined condition for connection, the step S102 comprises: switching the bypass connection controlling circuit to be open, and switching the main-path buffer circuit to be closed.

17. The method according to claim 15, wherein:
the battery module comprises the main-path connection controlling circuit, the bypass connection controlling circuit, and the main-path buffer circuit, and the bus buffer circuit is connected between the battery cluster and the corresponding power converter, wherein:
when the predetermined condition is the predetermined condition for disconnection, the step S102 comprises: switching the main-path connection controlling circuit to be open and controlling the bus controllable switch in the bus buffer circuit to be off, and then switching the bypass connection controlling circuit to be closed; and
when the predetermined condition is he predetermined condition for connection, the step S102 comprises: switching the bypass connection controlling circuit to be open, and switching the main-path buffer circuit to be closed; or
the battery module comprises the main-path connection controlling circuit, the bypass connection controlling circuit, and the bypass buffer circuit, and the bus buffer circuit is connected between the battery cluster and the corresponding power converter, wherein:
when the predetermined condition is the predetermined condition for disconnection, the step S102 comprises: switching the main-path connection controlling circuit to be open, and switching the bypass buffer circuit to be closed; and
when the predetermined condition is the predetermined condition for connection, the step S102 comprises: switching the bypass connection controlling circuit to be open and controlling the bus controllable switch in the bus buffer circuit to be off, and then switching the main-path connection controlling circuit to be closed.

18. The method according to claim 15, wherein after the step S102, the method further comprises:
step S103, determining whether the difference between the voltage across the battery cluster and the voltage across the bus capacitor is within a predetermined range; and
step S104, stopping buffering the abrupt power change to complete a process of connecting the battery module to the power path or disconnecting the battery module from the power path, in response to the difference being within the predetermined range.

19. The control method for the power storage system according to claim 18, wherein:
the battery module comprises the main-path connection controlling circuit, the bypass connection controlling circuit, the main-path buffer circuit, and the bypass buffer circuit, wherein:
when the predetermined condition is the predetermined condition for disconnection, the step S104 comprises switching the bypass connection controlling circuit to be closed; and
when the predetermined condition is the predetermined condition for connection, the step S104 comprises switching the main-path connection controlling circuit to be closed;
the battery module comprises the main-path connection controlling circuit, the bypass connection controlling circuit, and the main-path buffer circuit, and the bus buffer circuit is connected between the battery cluster and the corresponding power converter, wherein:
when the predetermined condition is the predetermined condition for disconnection, the step S 104 comprises switching the bus controllable switch to be on; and
when the predetermined condition is the predetermined condition for connection, the step S104 comprises switching the main-path connection controlling circuit to be switched to be closed;
the battery module comprises the main-path connection controlling circuit, the bypass connection controlling circuit, and the bypass buffer circuit, and the bus buffer circuit is connected between the battery cluster and the corresponding power converter, wherein:
when the predetermined condition is the predetermined condition for disconnection, the step S104 comprises switching the bypass connection controlling circuit to be closed; and
when the predetermined condition is the predetermined condition for connection, the step S104 comprises switching the bus controllable switch to be on.

20. The method according to claim 19, wherein:
after switching the bypass connection controlling circuit to be closed, the method further comprises switching the bypass buffer circuit to be open; and
after switching the main-path connection controlling circuit to be closed, the method further comprises switching the main-path buffer circuit to be open.

21. The method according to any one of claims 14 to 20, wherein in response to the battery module meeting the predetermined conditions and before the step S102, the method comprises:
step S111, limiting a current on a direct current (DC) bus of the corresponding power converter within a predetermined current range.

22. The method according to claim 21, wherein the step S111 comprises:
controlling the current on the DC bus to be lowered into the predetermined current range; and
controlling the corresponding power converter to lock transistors in the corresponding power converter, or switching off the main-path switch in the switch box between the battery cluster and the corresponding power converter when there is the switch box.

23. The method according to any one of claims 14 to 20, wherein after the step S104, the method further comprises:
step S105, updating a parameter of the battery cluster, and controlling the corresponding power converter to operate normally, wherein the steps S101 to S105 are repeated until each of the battery modules in each of the at least one battery cluster meets the predetermined condition.

24. The method according to any one of claims 14 to 10, wherein before the step S101, the method further comprises:
step S201, performing self-inspection at start-up, and controlling a power path between the battery cluster and the corresponding power converter to be closed in response to a result of the self-inspection being normal;
step S202, detecting a parameter of the battery cluster, setting a reference range of the parameter, and switching off all switches in each of the battery modules; and
step S203, controlling the main-path connection controlling circuit in each of the battery modules to be closed, and controlling the corresponding power converter to operate normally.
